# EUROPEAN PATENT APPLICATION

(11) **EP 3 416 082 A1**
(43) Date of publication of application: **19.12.2018**
(21) Application number: 18163019.5
(22) Date of filing: 21.03.2018
(51) Int. Cl.: G06F 21/51, G06F 21/64, G06F 21/57

(54) **METHOD AND APPARATUS FOR SIGNING AND VERIFYING APPLICATION INSTALLATION PACKAGE, AND STORAGE MEDIUM**

(30) Priority: 14.06.2017 CN 201710448468
(71) Applicant: Beijing Xiaomi Mobile Software Co., Ltd., Beijing 100085 (CN)
(72) Inventor: CHEN, Shun, Beijing, 100085 (CN); DONG, Hongguang, Beijing, 100085 (CN)
(74) Representative: Steinbauer, Florian

(57) **Abstract**

The present invention relates to a method and apparatus for signing and verifying an application installation package, and storage medium, and belongs to the technical field of application security. The method includes: acquiring the application installation package, wherein the application installation package comprises an installation file, first signature information and a first public key, the first signature information is signature information of the application installation package, and the first public key is used for verifying the first signature information (101); and signing the first public key using a first private key to obtain second signature information and adding the second signature information and a second public key to the application installation package to implement a signature of the application installation package, wherein the second public key is used for verifying the second signature information (102). The present invention can verify whether the first public key has been replaced by signing the first public key, thus whether the application installation package has been tampered can be detected more accurately, improving the security and accuracy.

## Description

### TECHNICAL FIELD

The present invention relates to the technical field of application security, and more particularly to a method and apparatus for signing and verifying an application installation package, and a storage medium.

### BACKGROUND ART

With the increase in popularity of terminals, such as smart phones, tablet computers, and the like, there is also an increase in attempted security breaches of such terminals (e.g., hacking of the terminals). Increased hacking attempts result in a possibility that an application installation package that is downloaded by a user from the Internet has been tampered with by a third-party user, consequently rendering an installation of such a tampered application potentially dangerous. In order to facilitate the detection of such tampering, it is usually necessary to sign the application installation package after the application installation package has been developed, and to have the ability to detect whether the application installation package has been tampered with by verifying a signature of the application installation package.

A method for signing and verifying an application installation package is provided in the related arts, comprising: first, after the development for the application installation package is completed, signing the application installation package using a private key set by an application developer to obtain signature information of the application installation package, then generating a first public key used for verifying the signature information, and adding the signature information and the first public key to the application installation package, and finally uploading the application installation package to an application download platform such as an application store. When the application download platform receives a download request for the application installation package from a terminal, the application installation package is sent to the terminal. After receiving the application installation package, the terminal acquires the signature information and the first public key included in the application installation package, and verifies the signature information based on the first public key. If the signature information is verified successfully, it is determined that the application installation package has not been tampered with.

### SUMMARY

In order to overcome the problems in the related arts, the present invention provides a method and apparatus for signing and verifying an application installation package, and a storage medium.

According to a first aspect of the present invention, there is provided a method for signing an application installation package. The method includes: acquiring the application installation package, wherein the application installation package includes an installation file, first signature information and a first public key, wherein the first signature information is signature information of the application installation package, and the first public key is used for verifying the first signature information; signing the first public key using a first private key to obtain second signature information; and adding the second signature information and a second public key to the application installation package to implement a signature of the application installation package, wherein the second public key is used for verifying the second signature information.

Advantageously, the signing the first public key using a first private key to obtain second signature information may include: when the application installation package includes an application identification, signing the application identification and the first public key using the first private key and determining signature information obtained after the signing as the second signature information.

Advantageously, the signing the first public key using a first private key to obtain second signature information and adding the second signature information and a second public key to the application installation package may include: when the application installation package includes a plurality of sub installation packages and each sub installation package includes at least one installation file and signature information of each installation file, signing, for each sub installation package of the plurality of sub installation packages, the sub installation package using the first private key and adding signature information of the sub installation package and the second public key to the corresponding sub installation package, wherein the second public key is used for verifying the signature information of the sub installation package.

Advantageously, after the acquiring the application installation package, the method may further include: when the application installation package further includes a list of permissions for the application, signing the list of permissions using a second private key to obtain third signature information; and adding the third signature information and a third public key to the application installation package, wherein the third public key is used for verifying the third signature information.

According to a second aspect of the present invention, there is provided a method for verifying an application installation package. The method includes: downloading the application installation package from an application download platform, wherein the application installation package includes an installation file, first signature information, a first public key, second signature information, and a second public key; wherein the first signature information is signature information of the application installation package, the first public key is used for verifying the first signature information, the second signature information is obtained via signing the first public key using a first private key by the application download platform, and the second public key is used for verifying the second signature information; and verifying the application installation package based on the first signature information, the first public key, the second signature information, and the second public key to determine whether the application installation package has been tampered with.

Advantageously, the verifying the application installation package based on the first signature information, the first public key, the second signature information, and the second public key to determine whether the application installation package has been tampered with may include: verifying the second signature information based on the second public key; when the verifying the second signature information fails, determining that the application installation package has been tampered with; when the verifying the second signature information is successful, verifying the first signature information based on the first public key; when the verifying the first signature information fails, determining that the application installation package has been tampered with; and when the verifying the first signature information is successful, determining that the application installation package has not been tampered with.

Advantageously, the downloading the application installation package from an application download platform may include: downloading, from the application download platform, at least one sub installation package of a plurality of sub installation packages included in the application installation package; wherein for each sub installation package of the at least one sub installation packages, the sub installation package includes at least one installation file, signature information of the at least one installation file, the first public key, signature information of the sub installation package, and the second public key, wherein the signature information of the sub installation package is obtained via signing the sub installation package using the first private key by the application download platform.

Advantageously, the verifying the application installation package based on the first signature information, the first public key, the second signature information, and the second public key to determine whether the application installation package has been tampered with may include: verifying, for each sub installation package of the at least one sub installation package, the signature information of the sub installation package based on the second public key; when the verifying the signature information of the sub installation package fails, determining that the sub installation package has been tampered with; when the verifying the signature information of the sub installation package is successful, verifying the signature information of the at least one installation file based on the first public key; when the verifying the signature information of the at least one installation file fails, determining that the sub installation package has been tampered with; and when the verifying the signature information of the at least one installation file is successful, determining that the sub installation package has not been tampered with.

Advantageously, the method may further include: when the application installation package further includes a list of permissions, third signature information, and a third public key, verifying the third signature information based on the third public key; wherein the third signature information is obtained via signing the list of permissions using a second private key by the application download platform, wherein the third public key is used for verifying the third signature information; and determining whether the list of permissions has been tampered with based on the result of verifying the third signature information.

According to a third aspect of the present invention, there is provided an apparatus for signing an application installation package. The apparatus includes: an acquiring module configured to acquire the application installation package, wherein the application installation package includes an installation file, first signature information and a first public key, wherein the first signature information is signature information of the application installation package, and the first public key is used for verifying the first signature information; a first signing module configured to sign the first public key using a first private key to obtain second signature information and add the second signature information and a second public key to the application installation package to implement a signature of the application installation package, wherein the second public key is used for verifying the second signature information.

Advantageously, the first signing module may be configured to, when the application installation package includes an application identification, sign the application identification and the first public key using the first private key and determine signature information obtained after the signing as the second signature information.

Advantageously, the first signing module may be configured to, when the application installation package includes a plurality of sub installation packages and each sub installation package includes at least one installation file and signature information of each installation file, sign, for each sub installation package of the plurality of sub installation packages, the sub installation package using the first private key and add signature information of the sub installation package and the second public key to the corresponding sub installation package, wherein the second public key is used for verifying the signature information of the sub installation package.

Advantageously, the apparatus may further include: a second signing module configured to, when the application installation package includes a list of permissions for the application, sign the list of permissions using a second private key to obtain third signature information; and an adding module configured to add the third signature information and a third public key to the application installation package, wherein the third public key is used for verifying the third signature information.

According to a fourth aspect of the present invention, there is provided an apparatus for verifying an application installation package. The apparatus includes: a downloading module configured to download the application installation package from an application download platform, wherein the application installation package includes an installation file, first signature information, a first public key, second signature information, and a second public key; wherein the first signature information is signature information of the application installation package, the first public key is used for verifying the first signature information, the second signature information is obtained via signing the first public key using a first private key by the application download platform, and the second public key is used for verifying the second signature information; and a first verifying module configured to verify the application installation package based on the first signature information, the first public key, the second signature information, and the second public key to determine whether the application installation package has been tampered with.

Advantageously, the first verifying module may include: a first verifying sub-module configured to verify the second signature information based on the second public key; a first determining sub-module configured to, when the verifying the second signature information fails, determine that the application installation package has been tampered with; a second verifying sub-module configured to, when the verifying the second signature information is successful, verify the first signature information based on the first public key; a second determining sub-module configured to, when the verifying the first signature information fails, determine that the application installation package has been tampered with; and a third determining sub-module configured to, when the verifying the first signature information is successful, determine that the application installation package has not been tampered with.

Advantageously, the downloading module may be configured to download, from the application download platform, at least one sub installation package of a plurality of sub installation packages included in the application installation package; wherein for each sub installation package of the at least one sub installation packages, the sub installation package includes at least one installation file, signature information of the at least one installation file, the first public key, signature information of the sub installation package, and the second public key, the signature information of the sub installation package is obtained via signing the sub installation package using the first private key by the application download platform.

Advantageously, the first verifying module may include: a third verifying sub-module configured to verify, for each sub installation package of the at least one sub installation package, the signature information of the sub installation package based on the second public key; a fourth determining sub-module configured to, when the verifying the signature information of the sub installation package fails, determine that the sub installation package has been tampered with; a fourth verifying sub-module configured to, when the verifying the signature information of the sub installation package is successful, verify the signature information of the at least one installation file based on the first public key; a fifth determining sub-module configured to, when the verifying the signature information of the at least one installation file fails, determine that the sub installation package has been tampered with; and a sixth determining sub-module configured to, when the verifying the signature information of the at least one installation file is successful, determine that the sub installation package has not been tampered with.

Advantageously, the apparatus may further include: a second verifying module configured to, when the application installation package includes a list of permissions, third signature information, and a third public key, verify the third signature information based on the third public key; wherein the third signature information is obtained via signing the list of permissions using a second private key by the application download platform, wherein the third public key is used for verifying the third signature information; and a determining module configured to determine whether the list of permissions has been tampered with based on the result of verifying the third signature information.

According to a fifth aspect of the present invention, there is provided an apparatus for signing an application installation package. The apparatus includes: a processor; and a memory for storing instructions executable by the processor, wherein the processor is configured to perform the method for signing an application installation package according to the first aspect described above.

According to a sixth aspect of embodiments of the present invention, there is provided an apparatus for verifying an application installation package. The apparatus includes: a processor; and a memory for storing instructions executable by the processor, wherein the processor is configured to perform the method for verifying an application installation package according to the second aspect described above.

According to a seventh aspect of embodiments of the present invention, there is provided a computer-readable storage medium having instructions stored thereon that, when executed by a processor, cause the processor to implement the method for signing an application installation package according to the first aspect described above.

According to an eighth aspect of embodiments of the present invention, there is provided a computer-readable storage medium having instructions stored thereon that, when executed by a processor, cause the processor to implement the method for verifying an application installation package according to the second aspect described above.

The technical solution provided by the embodiments of the present invention may include the following beneficial effects.

In embodiment of the present invention, an application installation package may be acquired, wherein the application installation package includes signature information of the application installation package and a first public key used for verifying the signature information, and then the first public key is signed using a first private key to obtain second signature information, and the second signature information and a second public key used for verifying the second signature information are added to the application installation package. Because if a third-party user tampers the application installation package by means of re-signing after tampering, the first public key in the application installation package will be replaced certainly. The present invention can verify whether the first public key has been replaced by signing the first public key, thus whether the application installation package has been tampered with can be detected more accurately, improving the security and accuracy.

It is to be understood that both the forgoing general description and the following detailed description are exemplary and illustrative only, and are not restrictive of the present invention.

### BRIEF DESCRIPTION OF THE DRAWINGS

The drawings are incorporated in, and formed a part of, the specification to show embodiments in conformity with the invention, and are for the purpose of illustrating the principles of the invention along with the specification.
Fig. 1 is a flow chart showing a method for signing an application installation package according to an exemplary embodiment.
Fig. 2 is a flow chart showing a method for verifying an application installation package according to an exemplary embodiment.
Fig. 3 is a flow chart showing a method for signing and verifying an application installation package according to an exemplary embodiment.
Fig. 4A is a block diagram illustrating an apparatus for signing an application installation package according to an exemplary embodiment.
Fig. 4B is a block diagram illustrating an apparatus for signing an application installation package according to another exemplary embodiment.
Fig. 5A is a block diagram illustrating an apparatus for verifying an application installation package according to an exemplary embodiment.
Fig. 5B is a block diagram illustrating an apparatus for verifying an application installation package according to another exemplary embodiment.
Fig. 6 is a schematic structural view of an application download platform 600 according to an exemplary embodiment.
Fig. 7 is a schematic structural view of a terminal 700 according to an exemplary embodiment.

The embodiments shown in the drawings mentioned above will be described in more detail in the following. The drawings and the literal description are by no means to limit the scope of the invention, but to illustrate to those skilled in the art the concept of the invention with reference to specific embodiments.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of apparatuses and methods consistent with aspects related to the invention as recited in the appended claims.

Application scenarios of embodiments of the present invention will be described before explaining the embodiments of the present invention in detail.

The embodiments of the present invention apply to a scene in which whether an application installation package has been tampered may be detected by signing and verifying the application installation package. In a method for signing and verifying provided in the related arts, if a third-party user re-signs the application installation package after tampering the application installation package, that is, the third-party user use a private key set by himself/herself to re-sign the tampered application installation package and generate a first public key used for verifying the signature information to replace the original first public key. In such a case, a terminal will use the replaced first public key to verify signature information of the tampered application installation package, and the obtained results for verifying will be that the verification is successful. Therefore, for this manner of tampering, the above method for signing and verifying will not be able to correctly detect whether the application installation package has been tampered, resulting in low security and accuracy.

In order to be able to detect whether the application installation package has been tampered more accurately and thus to improve the security of the terminal, the embodiments of the present invention provide a method for signing and verifying an application installation package as follows in detail.

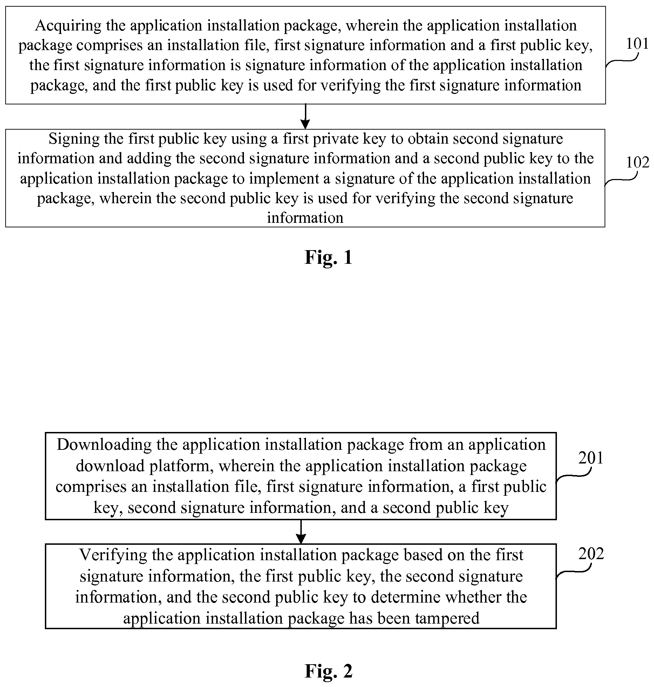

Fig. 1 is a flow chart showing a method for signing an application installation package according to an exemplary embodiment. The method may be applied to an application download platform such as an application store. As shown in Fig. 1, the method may include the following steps.

In step 101, the application installation package is acquired, wherein the application installation package includes an installation file, first signature information and a first public key, the first signature information is signature information of the application installation package, and the first public key is used for verifying the first signature information.

In step 102, the first public key is signed using a first private key to obtain second signature information, and the second signature information and a second public key are added to the application installation package to implement a signature of the application installation package, wherein the second public key is used for verifying the second signature information.

In embodiment of the present invention, an application installation package may be acquired, wherein the application installation package includes signature information of the application installation package and a first public key used for verifying the signature information, and then the first public key is signed using a first private key to obtain second signature information, and the second signature information and a second public key used for verifying the second signature information are added to the application installation package. Because if a third-party user tampers the application installation package by means of re-signing after tampering, the first public key in the application installation package will be replaced certainly. The present invention can verify whether the first public key has been replaced by signing the first public key, thus whether the application installation package has been tampered can be detected more accurately, improving the security and accuracy.

Advantageously, the signing the first public key using a first private key to obtain second signature information may include: if the application installation package further comprises an application identification, signing the application identification and the first public key using the first private key and determining signature information obtained after the signing as the second signature information.

Advantageously, the signing the first public key using a first private key to obtain second signature information and adding the second signature information and a second public key to the application installation package may include: if the application installation package comprises a plurality of sub installation packages and each sub installation package comprises at least one installation file and signature information of each installation file, signing, for each sub installation package of the plurality of sub installation packages, the sub installation package using the first private key and adding signature information of the sub installation package and the second public key to the corresponding sub installation package, wherein the second public key is used for verifying the signature information of the sub installation package.

Advantageously, after the acquiring the application installation package, the method may further include: if the application installation package further comprises a list of permissions for the application, signing the list of permissions using a second private key to obtain third signature information; and adding the third signature information and a third public key to the application installation package, wherein the third public key is used for verifying the third signature information.

All the optional solutions described above may form optional embodiments of the present invention in any combination, which will not be described in detail in embodiments of the present invention.

Fig. 2 is a flow chart showing a method for verifying an application installation package according to an exemplary embodiment. As shown in Fig. 2, the method may include the following steps.

In step 201, the application installation package is downloaded from an application download platform, wherein the application installation package comprises an installation file, first signature information, a first public key, second signature information, and a second public key; wherein the first signature information is signature information of the application installation package, the first public key is used for verifying the first signature information, the second signature information is obtained via signing the first public key using a first private key by the application download platform, and the second public key is used for verifying the second signature information.

In step 202, the application installation package is verified based on the first signature information, the first public key, the second signature information, and the second public key to determine whether the application installation package has been tampered.

In embodiment of the present invention, the application installation package may be verified based on the first signature information, the first public key, the second signature information, and the second public key to determine whether the application installation package has been tampered. Because if a third-party user tampers the application installation package by means of re-signing after tampering, the first public key in the application installation package will be replaced certainly. Therefore, whether the first public key has been replaced can be verified by verifying the application installation package based on the first signature information, the first public key, the second signature information, and the second public key, thus whether the application installation package has been tampered can be detected more accurately, improving the security and accuracy.

Advantageously, the verifying the application installation package based on the first signature information, the first public key, the second signature information, and the second public key to determine whether the application installation package has been tampered may include: verifying the second signature information based on the second public key; if the verifying the second signature information fails, determining that the application installation package has been tampered; if the verifying the second signature information is successful, verifying the first signature information based on the first public key; if the verifying the first signature information fails, determining that the application installation package has been tampered; and if the verifying the first signature information is successful, determining that the application installation package has not been tampered.

Advantageously, the downloading the application installation package from an application download platform may include: downloading, from the application download platform, at least one sub installation package of a plurality of sub installation packages included in the application installation package; wherein for each sub installation package of the at least one sub installation packages, the sub installation package comprises at least one installation file, signature information of the at least one installation file, the first public key, signature information of the sub installation package, and the second public key, wherein the signature information of the sub installation package is obtained via signing the sub installation package using the first private key by the application download platform.

Advantageously, the verifying the application installation package based on the first signature information, the first public key, the second signature information, and the second public key to determine whether the application installation package has been tampered may include: verifying, for each sub installation package of the at least one sub installation package, the signature information of the sub installation package based on the second public key; if the verifying the signature information of the sub installation package fails, determining that the sub installation package has been tampered; if the verifying the signature information of the sub installation package is successful, verifying the signature information of the at least one installation file based on the first public key; if the verifying the signature information of the at least one installation file fails, determining that the sub installation package has been tampered; and if the verifying the signature information of the at least one installation file is successful, determining that the sub installation package has not been tampered.

Advantageously, the method may further include: if the application installation package further comprises a list of permissions, third signature information, and a third public key, verifying the third signature information based on the third public key; wherein the third signature information is obtained via signing the list of permissions using a second private key by the application download platform, wherein the third public key is used for verifying the third signature information; and determining whether the list of permissions has been tampered based on the result of verifying the third signature information.

All the optional solutions described above may form optional embodiments of the present invention in any combination, which will not be described in detail in embodiments of the present invention.

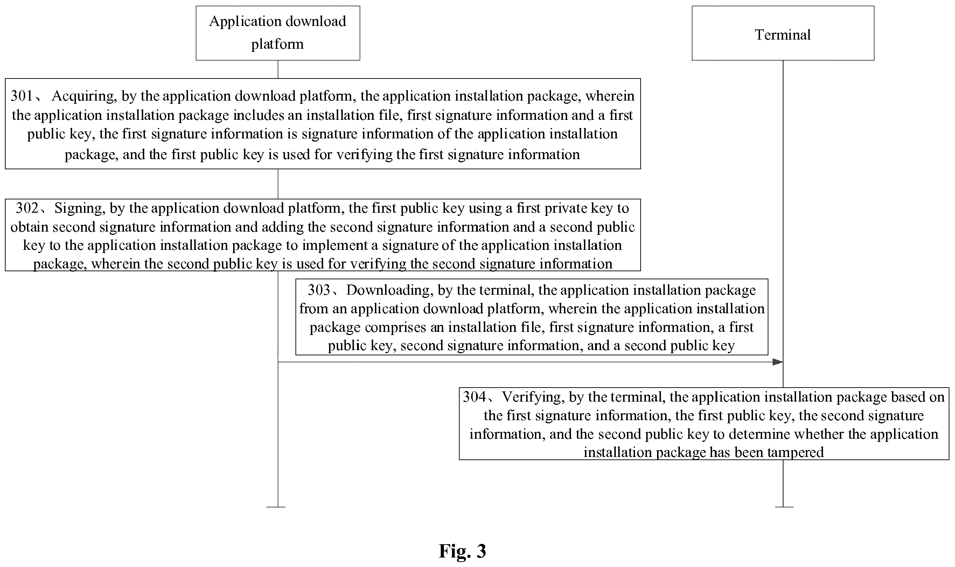

Fig. 3 is a flow chart showing a method for signing and verifying an application installation package according to an exemplary embodiment, the interactive main bodies of the method are an application download platform and a terminal. As shown in Fig. 3, the method may include the following steps.

In step 301, the application download platform acquires the application installation package, wherein the application installation package includes an installation file, first signature information and a first public key, the first signature information is signature information of the application installation package, and the first public key is used for verifying the first signature information.

The application download platform may receive an application installation package uploaded by an application developer, or may acquire the stored application installation package.

The first signature information may be obtained by signing the application installation package using a set private key by the application developer. For example, before the application developer uploads the application package, the application developer may sign the developed application installation package using a set private key by the terminal to obtain the first signature information, and then generate the first public key used for verifying the signature information, and add the first signature information and the first public key to the application installation package.

Signing the developed application installation package using the private key may include: performing calculation on the application installation package using a preset hash algorithm to obtain a hash value of the application installation package, and then using the private key to encrypt the hash value to obtain the first signature information. The first public key is a public key corresponding to the private key used at the time of signing, that is, the first public key and the private key used at the time of signing form a key pair for verifying the signature information of the application installation package, and the first public key may be in the form of a digital certificate or other forms carrying a public key.

Further, the application installation package may further include an application identification which may be a name or ID (identification number) and the like of an application corresponding to the application installation package, for example, the application identification may be an APP ID.

In step 302, the application download platform uses a first private key to sign the first public key to obtain second signature information, and adds the second signature information and a second public key to the application installation package to implement a signature of the application installation package, wherein the second public key is used for verifying the second signature information.

In order to prevent the application installation package from being tampered, after acquiring the application installation package, the application download platform may obtain the first public key from the application installation package and then use the first private key to sign the first public key. The first private key and the second public key form a key pair preset by the application download platform, that is, the second public key corresponds to the first private key, and the second public key may also in the form of a digital certificate or other forms carrying a public key.

In practice, the application download platform may sign the first public key when receiving a signing request sent by the terminal which uploads the application installation package, or may sign the first public key initiatively when acquiring the application installation package, or the signing the first public key may be triggered according to the setting of the application download platform after acquiring the application installation package. For example, the application download platform may sign the first public key at a preset time interval after acquiring the application installation package, or may first sign the first public key when receiving a download request from the terminal for the application installation package, and then send the application installation package to the terminal. The embodiments of the present invention do not limit the timing at which the application download platform signs the first public key.

The signing the first public key using a first private key to obtain second signature information and adding the second signature information and a second public key to the application installation package may include the following two implementations.

In the first implementation, the first public key is signed using a first private key to obtain second signature information, and the second signature information and a second public key are added to the application installation package.

Signing the first public key using a first private key refers to using the first private key to encrypt the first public key, or refers to first performing calculation on the first public key using a preset hash algorithm to obtain the hash value, and then using the first private key to encrypt the hash value. The second public key may verify the second signature information, that is, may decrypt the second signature information to obtain the first public key or the hash value of the first public key.

Further, if the application installation package further includes an application identification, the application identification and the first public key may be signed using the first private key, and signature information obtained after the signing may be determined as the second signature information.

The application identification and the first public key may be separately signed using the first private key, the second signature information includes signature information of the application identification and signature information of the first public key, or the application identification and the first public key may also be signed together, for example, a list of the application identification and the first public key are signed, and the embodiments of the present invention are not limited in this aspect.

In the second implementation, if the application installation package comprises a plurality of sub installation packages and each sub installation package comprises at least one installation file and signature information of each installation file, for each sub installation package of the plurality of sub installation packages, the sub installation package is signed using the first private key and signature information of the sub installation package and the second public key are added to the corresponding sub installation package, wherein the second public key is used for verifying the signature information of the sub installation package.

The signature information of the sub-installation package is the second signature information. For each sub installation package of the plurality of sub installation packages, the sub-installation package may be signed using the first private key to obtain the second signature information, and then the second signature information and the second public key are added to the corresponding sub installation package.

The embodiments of the present invention supports splitting an application installation package, that is, an original installation package including a plurality of installation files may be split into a plurality of sub installation packages, wherein each sub installation package includes at least one installation file. And before splitting, each installation file may also be signed to obtain the signature information of each installation file, and thus each sub installation package obtained by splitting may include at least one installation file and signature information of the at least one installation file.

For example, it is assumed that the original installation package includes four installation files A, B, C, and D, first these four installation files may be signed separately to obtain signature information of each of these four installation files, and in splitting, these four installation files may be split into a sub installation package 1 and a sub installation package 2, wherein the sub installation package 1 includes A and B and signature information of A and B, and the sub installation package 2 includes C and D and signature information of C and D.

Further, the application installation package may be split into a plurality of sub installation packages according to a preset policy, and each sub installation package of the plurality of sub installation packages may be used to implement a part of the function of the application. For example, the splitting may be based on application interfaces, each sub installation package is used to display one or more application interfaces of the application, or a plurality of sub installation packages are used to display an application interface for the application.

By splitting the application installation package into a plurality of sub installation packages, in the case where the application installation package is not installed and the terminal needs to use a certain function of the application, it is possible for the terminal to download only a part of the sub installation packages in the application installation package for implementing the certain function and to run the part of the sub installation packages to use the certain unction, without having to download and install the entire application installation package, which can save the time of downloading and installing the application installation package, improving the efficiency of using the application.

In practice, the splitting may be done by the application developer, or the splitting may also be done by the application download platform, and the embodiments of the present invention are not limited in this aspect. That is, a plurality of sub installation packages included in the application installation package may be obtained via splitting the original installation package including a plurality of sub installation packages by the application developer or the application download platform. The signature information of each installation file may also be obtained via signing each installation file by the application developer or the application download platform.

Signing the sub installation package using the first private key may include: first performing calculation on the sub installation package using a preset hash algorithm to obtain the hash value, and then using the first private key to encrypt the hash value. The second public key is used for verifying the signature information of the sub installation package, that is, the second public key may be used for decrypting the signature information of the sub installation package to obtain the hash value of the of the sub installation package.

For each sub installation package of the plurality of sub installation packages, the sub installation package may further include a first public key, and the first public key is used for verifying the signature information of each installation file in the sub installation package. Of course, in another embodiment, the sub installation package may also include at least one first public key, wherein the at least one first public key may correspond to the signature information of at least one installation file included in the sub installation package respectively, and may be used for verifying the signature information of the corresponding installation file.

Further, after the acquiring the application installation package, the method may further include: if the application installation package further comprises a list of permissions for the application, signing the list of permissions using a second private key to obtain third signature information; and adding the third signature information and a third public key to the application installation package, wherein the third public key is used for verifying the third signature information.

The third public key corresponds to the second private key, that is, the third public key and the second private key form a key pair, so that the third signature information may be verified. The third public key may also in the form of a digital certificate or other forms carrying a public key.

The list of permissions may include a plurality of permissions which the application corresponding to the application installation package has in operation, the plurality of permissions may be permission for acquiring a location of the terminal, permission for acquiring contacts of the terminal, and ROOT (root) permission and the like. Among them, ROOT permission is the highest permission for the application, and using ROOT permission may change the terminal system, such as may delete system files and the like.

The second private key may be the same as the first private key or may be a different key from the first private key, and the embodiments of the present invention are not limited in this aspect.

Further, if the application installation package also includes usage information of a signature or information such as an identification of a device which allows the application to be installed and the like, the application download platform may also use a private key to sign the usage information of the signature or the information such as an identification of a device which allows the application to be installed, and add the information obtained by signing and a public key corresponding to the used private key to the application installation package, so as to subsequently verify the corresponding information through the corresponding public key, to determine whether the corresponding information has been tampered, thereby further protecting the terminal in installation. The used private key may be the same as the second private key or the first private key described above, or may be different from them. In addition, the public key corresponding to the used private key may also be in the form of a digital certificate or other forms carrying a public key.

The application download platform uses the first private key to sign the first public key to obtain the second signature information, and adds the second signature information and the second public key to the application installation package, and the obtained application installation package may be stored in the application download platform for loading by the terminal.

In step 303, the terminal downloads the application installation package from the application download platform, wherein the application installation package comprises the installation file, the first signature information, the first public key, the second signature information, and the second public key.

In practice, the terminal may send a download request for the application installation package to the application download platform according to a download operation of a user. When receiving the download request, the application download platform may send the application installation package to the terminal.

Downloading the application installation package from the application download platform by the terminal may include the following two implementations.

In the first implementation, the terminal may download the entire application installation package from the application download platform, the application installation package includes all the installation files, the first signature information, the first public key, the second signature information, and the second public key of the application, wherein the first signature information is signature information of the application installation package, the first public key is used for verifying the first signature information, the second signature information is obtained via signing the first public key using a first private key by the application download platform, and the second public key corresponds to the first private key.

In the second implementation, the terminal may download, from the application download platform, at least one sub installation package of a plurality of sub installation packages included in the application installation package.

In the case where the application installation package is not installed and the terminal needs to use a certain function of the application, the terminal may download the at least one sub installation package from the application download platform, wherein the at least one sub installation package is used for implementing the certain function. For example, if any of the application interfaces of an uninstalled application needs to be displayed, the terminal may download at least one sub installation package required for displaying the application interface from the plurality of sub installation packages, and then run the at least one sub installation package to display the application interface.

For each sub installation package of the at least one sub installation packages, the sub installation package comprises at least one installation file, signature information of the at least one installation file, the first public key, signature information of the sub installation package, and the second public key, wherein the signature information of the sub installation package is obtained via signing the sub installation package using the first private key by the application download platform.

The first public key is used for verifying each signature information in the signature information of the at least one installation file. Of course, in another embodiment, the sub installation package may also include at least one first public key, wherein the at least one first public key may correspond to the signature information of at least one installation file included in the sub installation package respectively, and may be used for verifying the signature information of the corresponding installation file. The second public key is used for verifying the signature information of the sub installation package.

In step 304, the terminal verifies the application installation package based on the first signature information, the first public key, the second signature information, and the second public key to determine whether the application installation package has been tampered.

That is, the terminal may verify the second signature information based on the second public key, and determine whether the application installation package has been tampered based on the result of verifying the second signature information.

For the first implementation in the step 303 described above, the verifying the application installation package based on the first signature information, the first public key, the second signature information, and the second public key to determine whether the application installation package has been tampered may include the following steps (1)-(5).

In step (1), the second signature information is verified based on the second public key.

As the second signature information is obtained via signing the first public key using a first private key, and the second public key corresponds to the first private key, therefore based on the second public key, the second signature information may be verified.

If the second signature information is obtained via encrypting the first public key using a first private key by the application download platform, then the verifying the second signature information based on the second public key may include: decrypting the second signature information using the second public key to obtain the first public key; comparing the decrypted first public key with the first public key included in the application installation package; and if they are the same, determining that the second signature information is successfully verified; and if they are different, determining that the verifying the second signature information fails.

If the second signature information is obtained by the application download platform via first performing calculation on the first public key using a preset hash algorithm to obtain the hash value of the first public key, and then using the first private key to encrypt the hash value, then the verifying the second signature information based on the second public key may include: performing calculation on the first public key using a preset hash algorithm to obtain the hash value of the first public key; decrypting the second signature information using the second public key to obtain the decrypted information; and comparing the calculated hash value with the decrypted information; if they are the same, determining that the second signature information is successfully verified; and if they are different, determining that the verifying the second signature information fails.

In step (2), if the verifying the second signature information fails, it is determined that the application installation package has been tampered.

If the verifying the second signature information fails, it indicates that the first public key in the application installation package has been tampered. Because if a third-party user tampers the application installation package by means of re-signing after tampering, the first public key in the application installation package will be replaced certainly. Therefore, if it is determined that the first public key in the application installation package has been tampered, then it is determined that the application installation package has been tampered.

In step (3), if the verifying the second signature information is successful, the first signature information is verified based on the first public key.

If the verifying the second signature information is successful, it is determined that the first public key has not been tampered, and the first signature information may be verified based on the first public key.

The verifying the first signature information based on the first public key may include: performing calculation on the first signature information using a preset hash algorithm to obtain the hash value of the application installation package; decrypting the first signature information using the first public key to obtain the decrypted information; and comparing the calculated hash value of the application installation package with the decrypted information; if they are the same, determining that the first signature information is successfully verified; and if they are different, determining that the verifying the first signature information fails.

In step (4), if the verifying the first signature information fails, it is determined that the application installation package has been tampered.

In step (5), if the verifying the first signature information is successful, it is determined that the application installation package has not been tampered.

For the second implementation in the step 303 described above, the verifying the application installation package based on the first signature information, the first public key, the second signature information, and the second public key to determine whether the application installation package has been tampered may include the following steps (1)-(5).

In step (1), for each sub installation package of the at least one sub installation packages, the signature information of the sub installation package is verified based on the second public key.

The principle of the manner of verifying the signature information of the sub installation package based on the second public key is the same as that of the manner of verifying the first signature information based on the first public key described above, and the specific process may be derived in a similar way, which will not be described in detail here.

In step (2), if the verifying the signature information of the sub installation package fails, it is determined that the sub installation package has been tampered.

In step (3), if the verifying the signature information of the sub installation package is successful, the signature information of the at least one installation file is verified based on the first public key.

The principle of the manner of verifying the signature information of the at least one installation file based on the first public key is the same as that of the manner of verifying the first signature information based on the first public key described above, and the specific process may be derived in a similar way, which will not be described in detail here.

In step (4), if the verifying the signature information of the at least one installation file fails, it is determined that the sub installation package has been tampered.

In step (5), if the verifying the signature information of the at least one installation file is successful, it is determined that the sub installation package has not been tampered.

It should be noted that the terminal may verify the application installation package when it needs to install the application installation package. If it is determined that the application installation package has not been tampered, it indicates that the application installation package is trusted, thus the application installation package may be installed normally. If it is determined that the application installation package has been tampered, it indicates that the application installation package may be embedded with malicious code, thus the installation of the application installation package may be ended. Of course, the terminal may also verify the application installation package when the application is running after installing the application installation package, and if it is determined that the application installation package has not been tampered, the application may be run, and if it is determined that the application installation package has been tampered, then the running of the application may be ended. The embodiments of the present invention do not limit the timing of executing the step 304.

Further, when the application is running, if the application installation package further comprises a list of permissions, third signature information, and a third public key, the terminal may also verify the third signature information based on the third public key, and determine whether the list of permissions has been tampered based on the result of verifying the third signature information.

The third signature information is obtained via signing the list of permissions using a second private key by the application download platform, wherein the third public key is a public key corresponding to the second private key and is used for verifying the third signature information.

The principle of the manner of verifying the third signature information based on the third public key is the same as that of the manner of verifying the second signature information based on the second public key described above, and the specific process may be derived in a similar way, which will not be described in detail here. If the verifying the third signature information is successful, it may be determined that the list of permissions has not been tampered, and if the verifying the third signature information fails, it may be determined that the list of permissions has been tampered.

In practice, the application developer or the third-party user usually acquires privacy information of the terminal or changes the terminal system by tampering the permissions in the list of permissions, thus endangering the terminal security. For example, during the running of the application, if there is no ROOT permission in the list of permissions for the application, the third party user may invade the terminal system by changing one of the permissions in the list of permissions to ROOT permission. Therefore, if the permissions in the list of permissions have been tampered, it indicates that the terminal security may be endangered.

Further, in order to ensure the terminal security, if it is determined that the list of permissions has been tampered, the terminal may further display a reminder message to remind the user that the permissions for the application have been tampered. By signing and verifying the list of permissions, and reminding the user if the list of permissions has been tampered, the permissions for the application may be prevented from being tampering by the application developer or the third-party user randomly, thus ensuring the terminal security.

In embodiment of the present invention, an application installation package may be acquired, wherein the application installation package includes signature information of the application installation package and a first public key used for verifying the signature information, and then the first public key is signed using a first private key to obtain second signature information, and the second signature information and a second public key used for verifying the second signature information are added to the application installation package. Because if a third-party user tampers the application installation package by means of re-signing after tampering, the first public key in the application installation package will be replaced certainly. The present invention can verify whether the first public key has been replaced by signing the first public key, thus whether the application installation package has been tampered can be detected more accurately, improving the security and accuracy.

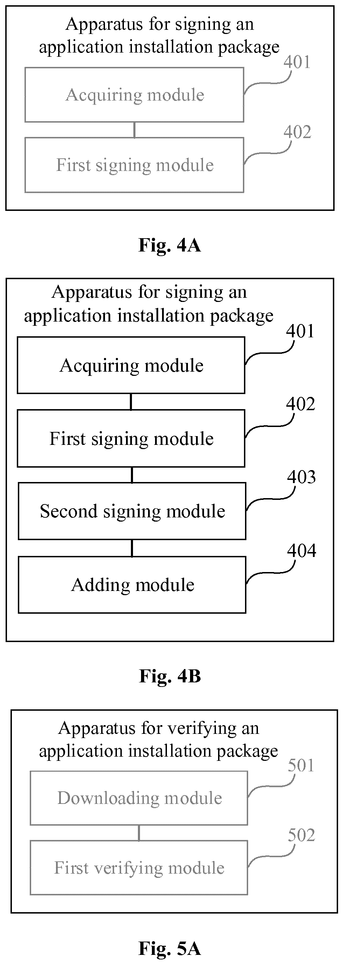

Fig. 4A is a block diagram illustrating an apparatus for signing an application installation package according to an exemplary embodiment. With reference to Fig. 4A, the apparatus includes an acquiring module 401 and a first signing module 402.

The acquiring module 401 is configured to acquire the application installation package, wherein the application installation package comprises an installation file, first signature information and a first public key, the first signature information is signature information of the application installation package, and the first public key is used for verifying the first signature information.

The first signing module 402 is configured to sign the first public key using a first private key to obtain second signature information and add the second signature information and a second public key to the application installation package to implement a signature of the application installation package, wherein the second public key is used for verifying the second signature information.

Advantageously, the first signing module 402 may be configured to, if the application installation package further comprises an application identification, sign the application identification and the first public key using the first private key and determine signature information obtained after the signing as the second signature information.

Advantageously, the first signing module 402 may be configured to, if the application installation package comprises a plurality of sub installation packages and each sub installation package comprises at least one installation file and signature information of each installation file, sign, for each sub installation package of the plurality of sub installation packages, the sub installation package using the first private key and adding signature information of the sub installation package and the second public key to the corresponding sub installation package, wherein the second public key is used for verifying the signature information of the sub installation package.

Advantageously, referring to Fig. 4B, the apparatus may further include: a second signing module 403 configured to, if the application installation package further comprises a list of permissions for the application, sign the list of permissions using a second private key to obtain third signature information; and an adding module 404 configured to add the third signature information and a third public key to the application installation package, wherein the third public key is used for verifying the third signature information.

With respect to the apparatuses of the embodiments described above, the manners in which the modules carry out the operations have been described in the embodiments of the methods, and will not be detailed here.

Fig. 5A is a block diagram illustrating an apparatus for verifying an application installation package according to an exemplary embodiment. With reference to Fig. 5A, the apparatus includes a downloading module 501 and a first verifying module 502.

The downloading module 501 is configured to download the application installation package from an application download platform, wherein the application installation package comprises an installation file, first signature information, a first public key, second signature information, and a second public key; wherein the first signature information is signature information of the application installation package, the first public key is used for verifying the first signature information, the second signature information is obtained via signing the first public key using a first private key by the application download platform, and the second public key is used for verifying the second signature information.

The first verifying module 502 is configured to verify the application installation package based on the first signature information, the first public key, the second signature information, and the second public key to determine whether the application installation package has been tampered.

Advantageously, the first verifying module 502 may include: a first verifying sub-module configured to verify the second signature information based on the second public key; a first determining sub-module configured to, if the verifying the second signature information fails, determine that the application installation package has been tampered; a second verifying sub-module configured to, if the verifying the second signature information is successful, verify the first signature information based on the first public key; a second determining sub-module configured to, if the verifying the first signature information fails, determine that the application installation package has been tampered; and a third determining sub-module configured to, if the verifying the first signature information is successful, determine that the application installation package has not been tampered.

Advantageously, the downloading module 501 may be configured to download, from the application download platform, at least one sub installation package of a plurality of sub installation packages included in the application installation package; wherein for each sub installation package of the at least one sub installation packages, the sub installation package comprises at least one installation file, signature information of the at least one installation file, the first public key, signature information of the sub installation package, and the second public key, the signature information of the sub installation package is obtained via signing the sub installation package using the first private key by the application download platform.

Advantageously, the first verifying module 502 may include: a third verifying sub-module configured to verify, for each sub installation package of the at least one sub installation package, the signature information of the sub installation package based on the second public key; a fourth determining sub-module configured to, if the verifying the signature information of the sub installation package fails, determine that the sub installation package has been tampered; a fourth verifying sub-module configured to, if the verifying the signature information of the sub installation package is successful, verify the signature information of the at least one installation file based on the first public key; a fifth determining sub-module configured to, if the verifying the signature information of the at least one installation file fails, determine that the sub installation package has been tampered; and a sixth determining sub-module configured to, if the verifying the signature information of the at least one installation file is successful, determine that the sub installation package has not been tampered.

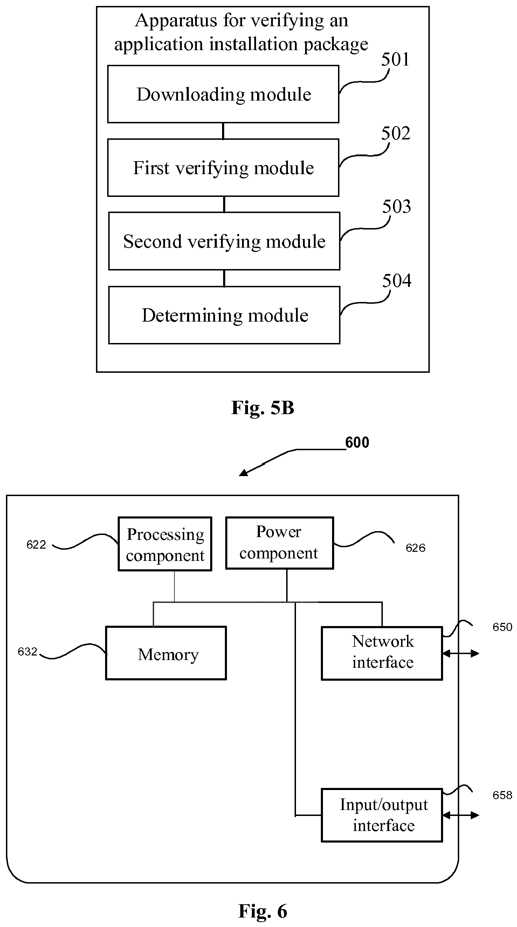

Advantageously, referring to Fig. 5B, the apparatus may further include: a second verifying module 503 configured to, if the application installation package further comprises a list of permissions, third signature information, and a third public key, verify the third signature information based on the third public key; wherein the third signature information is obtained via signing the list of permissions using a second private key by the application download platform, wherein the third public key is used for verifying the third signature information; and a determining module 504 configured to determine whether the list of permissions has been tampered based on the result of verifying the third signature information.

With respect to the apparatuses of the embodiments described above, the manners in which the modules carry out the operations have been described in the embodiments of the methods, and will not be detailed here.

Fig. 6 is a schematic structural view of an application download platform 600 according to an exemplary embodiment. For example, the application download platform 600 may be provided as a server. Referring to Fig. 6, the application download platform 600 may include a processing component 622 which may further include one or more processors, as well as memory resources represented by a memory 632 for storing instructions that may be executed by the processing component 622, such as an application. The applications stored in the memory 632 may include one or more modules each corresponding to a set of instructions. In addition, the processing component 622 may be configured to execute instructions to perform the methods provided in the embodiment of FIG. 1, FIG. 2, or FIG. 3 described above.

The application download platform 600 may also include a power component 626 configured to perform power management of the application download platform 600, a wired or wireless network interface 650 configured to connect the application download platform 600 to a network, and an input and output (I/O) interface 658. The application download platform 600 may operate based on an operating system stored in the memory 632, such as Windows Server™, Mac OS X™, Unix™, Linux™, FreeBSD™ or the like.

The present invention provides a non- transitory computer readable storage medium having stored therein instructions that, when executed by the processor of the server, cause the server to perform the methods provided in the embodiments of FIG. 1, FIG. 2, or FIG. 3 described above.

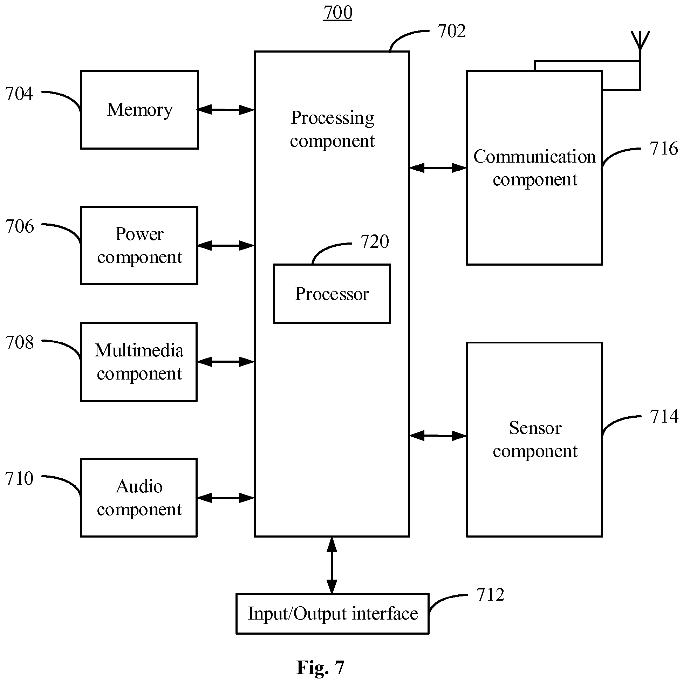

Fig. 7 is a schematic structural view of a terminal 700 according to an exemplary embodiment. For example, the terminal 700 may be a mobile phone, a computer, a digital broadcast terminal, a messaging device, a gaming console, a tablet, a medical device, an exercise equipment, a personal digital assistant, and the like.

Referring to Fig. 7, the terminal 700 may include one or more of the following components: a processing component 702, a memory 704, a power component 706, a multimedia component 708, an audio component 710, an input/output (I/O) interface 712, a sensor component 714, and a communication component 716.

The processing component 702 generally controls overall operations of the terminal 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation on the terminal 700. Examples of such data include instructions for any applications or methods operated on the terminal 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the terminal 700. The power component 706 may include a power management system, one or more power sources, and any other components associated with the generation, management, and distribution of power for the terminal 700.

The multimedia component 708 includes a screen providing an output interface between the terminal 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the terminal 700 is in an operation mode, such as a photographing mode or a video mode. Each of the front camera and the rear camera may be a fixed optical lens system or have optical focusing and zooming capability.

The audio component 710 is configured to output and/or input audio signals. For example, the audio component 710 includes a microphone ("MIC") configured to receive an external audio signal when the terminal 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, the peripheral interface modules being, for example, a keyboard, a click wheel, buttons, and the like. The buttons may include, but are not limited to, a home button, a volume button, a starting button, and a locking button.

The sensor component 714 includes one or more sensors to provide status assessments of various aspects of the terminal 700. For instance, the sensor component 714 may detect an open/closed status of the terminal 700, relative positioning of components (e.g., the display and the keypad, of the terminal 700). The sensor component 714 may further detect a change in position of the terminal 700 or of a component of the terminal 700, a presence or absence of user contact with the terminal 700, an orientation or an acceleration/deceleration of the terminal 700, and a change in temperature of the terminal 700. The sensor component 714 may include a proximity sensor configured to detect the presence of a nearby object without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the terminal 700 and other devices. The terminal 700 can access a wireless network based on a communication standard, such as WiFi, 2G, or 3G, or a combination thereof. In an exemplary embodiment, the communication component 716 receives a broadcast signal or broadcast associated information from an external broadcast management system via a broadcast channel. In an exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the methods provided in FIG. 1, FIG. 2, or FIG. 3 described above.

In exemplary embodiments, also provided is a non-transitory computer-readable storage medium including instructions, such as included in the memory 704, executable by the processor 720 in the terminal 700, for performing the above-described methods. For example, the non-transitory computer-readable storage medium may be a ROM, a random access memory (RAM), a CD-ROM, a magnetic tape, a floppy disc, an optical data storage device, and the like.

The present invention provides a non-transitory computer readable storage medium having stored therein instructions that, when executed by the processor of the terminal, cause the terminal to perform the methods provided in the embodiments of FIG. 1, FIG. 2, or FIG. 3 described above.

A person skilled in the art, when considering the descriptions and practicing the present invention disclosed here, will easily conceive other implementations of the present invention. The present application is intended to cover any variation, use or adaptation of the invention, which follow general principle of the invention and include general knowledge or customary technical means in the art that are not disclosed herein. The descriptions and embodiments are only regarded to be exemplary, and real scope of the invention are indicated by the following claims.

It will be appreciated that the invention is not limited to the exact construction that has been described above and illustrated in the accompanying drawings, and that various modifications and changes can be made without departing from the scope thereof. It is intended that the scope of the invention only be limited by the appended claims.

## Claims

1. A method for signing an application installation package, comprising:
acquiring the application installation package, wherein the application installation package includes an installation file, first signature information and a first public key, wherein the first signature information is signature information of the application installation package, and the first public key is used for verifying the first signature information (101);
signing the first public key using a first private key to obtain second signature information (102); and
adding the second signature information and a second public key to the application installation package to implement a signature of the application installation package, wherein the second public key is used for verifying the second signature information (102).

2. The method of claim 1, further comprising:
when the application installation package includes an application identification, signing the application identification and the first public key using the first private key; and
determining signature information obtained after the signing as the second signature information.

3. The method of claim 1 or 2, further comprising:
when the application installation package includes a plurality of sub installation packages and each sub installation package includes at least one installation file and signature information of each installation file, signing, for each sub installation package of the plurality of sub installation packages, the sub installation package using the first private key, and adding signature information of the sub installation package and the second public key to the corresponding sub installation package, wherein the second public key is used for verifying the signature information of the sub installation package.

4. The method of any of claims 1-3, further comprising:
when the application installation package includes a list of permissions for the application, signing the list of permissions using a second private key to obtain third signature information; and
adding the third signature information and a third public key to the application installation package, wherein the third public key is used for verifying the third signature information.

5. A method for verifying an application installation package, comprising:
downloading the application installation package from an application download platform, wherein the application installation package includes an installation file, first signature information, a first public key, second signature information, and a second public key (201);
wherein the first signature information is signature information of the application installation package, the first public key is used for verifying the first signature information, the second signature information is obtained via signing the first public key using a first private key by the application download platform, and the second public key is used for verifying the second signature information; and
verifying the application installation package based on the first signature information, the first public key, the second signature information, and the second public key to determine whether the application installation package has been tampered with (202).

6. The method of claim 5, further comprising:
verifying the second signature information based on the second public key;
when the verifying the second signature information fails, determining that the application installation package has been tampered with;
when the verifying the second signature information is successful, verifying the first signature information based on the first public key;
when the verifying the first signature information fails, determining that the application installation package has been tampered with; and
when the verifying the first signature information is successful, determining that the application installation package has not been tampered with.

7. The method of claim 5 or 6, further comprising:
downloading, from the application download platform, at least one sub installation package of a plurality of sub installation packages included in the application installation package;
wherein for each sub installation package of the at least one sub installation packages, the sub installation package includes at least one installation file, signature information of the at least one installation file, the first public key, signature information of the sub installation package, and the second public key, wherein the signature information of the sub installation package is obtained via signing the sub installation package using the first private key by the application download platform.

8. The method of claim 7, further comprising:
verifying, for each sub installation package of the at least one sub installation package, the signature information of the sub installation package based on the second public key;
when the verifying the signature information of the sub installation package fails, determining that the sub installation package has been tampered with;
when the verifying the signature information of the sub installation package is successful, verifying the signature information of the at least one installation file based on the first public key;
when the verifying the signature information of the at least one installation file fails, determining that the sub installation package has been tampered with; and
when the verifying the signature information of the at least one installation file is successful, determining that the sub installation package has not been tampered with.

9. The method of any of claims 5-8, wherein the method further comprises:
when the application installation package includes a list of permissions, third signature information, and a third public key, verifying the third signature information based on the third public key;
wherein the third signature information is obtained via signing the list of permissions using a second private key by the application download platform, wherein the third public key is used for verifying the third signature information; and
determining whether the list of permissions has been tampered with based on the result of verifying the third signature information.

10. An apparatus for signing an application installation package, **characterized by** comprising:
an acquiring module (401) configured to acquire the application installation package, wherein the application installation package includes an installation file, first signature information and a first public key, wherein the first signature information is signature information of the application installation package, and the first public key is used for verifying the first signature information;
a first signing module (402) configured to sign the first public key using a first private key to obtain second signature information and add the second signature information and a second public key to the application installation package to implement a signature of the application installation package, wherein the second public key is used for verifying the second signature information.

11. An apparatus for verifying an application installation package, comprising:
a downloading module (501) configured to download the application installation package from an application download platform, wherein the application installation package includes an installation file, first signature information, a first public key, second signature information, and a second public key;
wherein the first signature information is signature information of the application installation package, the first public key is used for verifying the first signature information, the second signature information is obtained via signing the first public key using a first private key by the application download platform, and the second public key is used for verifying the second signature information; and
a first verifying module (502) configured to verify the application installation package based on the first signature information, the first public key, the second signature information, and the second public key to determine whether the application installation package has been tampered with.

12. The apparatus of claim 11, wherein the first verifying module (502) comprises:
a first verifying sub-module configured to verify the second signature information based on the second public key;
a first determining sub-module configured to, when the verifying the second signature information fails, determine that the application installation package has been tampered with;
a second verifying sub-module configured to, when the verifying the second signature information is successful, verify the first signature information based on the first public key;
a second determining sub-module configured to, when the verifying the first signature information fails, determine that the application installation package has been tampered with; and
a third determining sub-module configured to, when the verifying the first signature information is successful, determine that the application installation package has not been tampered with.

13. The apparatus of claim 11 or 12, wherein the downloading module (501) is configured to:
download, from the application download platform, at least one sub installation package of a plurality of sub installation packages included in the application installation package;
wherein for each sub installation package of the at least one sub installation packages, the sub installation package includes at least one installation file, signature information of the at least one installation file, the first public key, signature information of the sub installation package, and the second public key, the signature information of the sub installation package is obtained via signing the sub installation package using the first private key by the application download platform.

14. The apparatus of claim 13, wherein the first verifying module (502) comprises:
a third verifying sub-module configured to verify, for each sub installation package of the at least one sub installation package, the signature information of the sub installation package based on the second public key;
a fourth determining sub-module configured to, when the verifying the signature information of the sub installation package fails, determine that the sub installation package has been tampered with;
a fourth verifying sub-module configured to, when the verifying the signature information of the sub installation package is successful, verify the signature information of the at least one installation file based on the first public key;
a fifth determining sub-module configured to, when the verifying the signature information of the at least one installation file fails, determine that the sub installation package has been tampered with; and
a sixth determining sub-module configured to, when the verifying the signature information of the at least one installation file is successful, determine that the sub installation package has not been tampered with.

15. An apparatus for signing or verifying an application installation package, comprising:
a processor (720); and
a memory (632, 704) for storing instructions executable by the processor (720),
wherein the processor (720) is configured to perform the method of any of claims 1-9.
